# EUROPEAN PATENT APPLICATION

(11) **EP 4 412 263 A1**
(43) Date of publication of application: **07.08.2024**
(21) Application number: 22885748.8
(22) Date of filing: 18.10.2022
(51) Int. Cl.: H04W 4/70

(54) **COMMUNICATION METHOD AND SYSTEM, AND RELATED APPARATUS**

(30) Priority: 29.10.2021 CN 202111276142
(71) Applicant: Huawei Technologies Co., Ltd., Shenzhen, Guangdong 518129 (CN)
(72) Inventor: LUO, Zhihu, Shenzhen, Guangdong 518129 (CN); WU, Yiling, Shenzhen, Guangdong 518129 (CN); JIN, Zhe, Shenzhen, Guangdong 518129 (CN); CHEN, Jun, Shenzhen, Guangdong 518129 (CN); QU, Weilin, Shenzhen, Guangdong 518129 (CN)
(74) Representative: Maiwald GmbH
(86) International application number: PCT/CN2022/125937
(87) International publication number: WO 2023/071870

(57) **Abstract**

This application provides a communication method and system, and a related apparatus. The communication method is applied to the communication system including a first device and a second device. In the communication method, the first device may indicate the second device to reserve a channel resource, and the second device does not perform data transmission on the reserved channel resource. This prevents the second device from occupying channel resources for long time, to release channel resources for a cellular communication system. The first device may schedule a terminal device other than the second device by using the released channel resources. This improves data transmission efficiency.

## Description

This application claims priority to Chinese Patent Application No. 202111276142.7, filed with the China National Intellectual Property Administration on October 29, 2021 and entitled "COMMUNICATION METHOD AND SYSTEM, AND RELATED APPARATUS", which is incorporated herein by reference in its entirety.

### TECHNICAL FIELD

This application relates to the field of communication technologies, and in particular, to a communication method and system, and a related apparatus.

### BACKGROUND

In an application scenario of the 5th generation (5th Generation, 5G) mobile communication technology, massive machine-type communication (massive Machine-Type Communication, mMTC) is also widely used. The mMTC is mainly oriented to an application scenario in which sensors and data collection are used as targets, namely, large-scale internet of things (Internet of Things, IoT) services. With access of massive IoT devices, to reduce costs, power consumption, and the like of the IoT devices, the 3rd generation partnership project (3rd Generation Partnership Project, 3GPP) supports a passive internet of things (Passive IoT) communication technology and a wake-up receiver or wake-up radio (wake-up receiver or wake-up radio, WUR) communication technology in a 5G new radio (New Radio, NR) system, to meet requirements of IoT application costs and power consumption.

However, after the passive IoT and the WUR are introduced into the 5G NR system, passive IoT data transmission or WUR data transmission occupies 5G NR channel resources. How to schedule the channel resources, to enable the passive IoT data transmission and the WUR data transmission not to affect 5G NR data transmission is an urgent problem to be resolved.

### SUMMARY

Embodiments of this application provide a communication method and system, and a related apparatus, to prevent a second device from occupying channel resources for long time, to release channel resources for a cellular communication system. A first device may schedule a terminal device other than the second device by using the released channel resources. This improves data transmission efficiency.

According to a first aspect, an embodiment of this application provides a communication method. The method includes: A first device determines first indication information, where the first indication information is used by a second device to determine a first resource, and the first resource is not used by the second device to perform data transmission; and the first device sends the first indication information to the second device. The first indication information includes a first duration, and a channel resource in the first duration after the first indication information is the first resource. Alternatively, the first indication information includes a second duration and a third duration, a start location of the third duration is a time domain location whose distance from a reference time domain location is N second durations, there is an interval of one third duration between every two second durations, channel resources in the N second durations are used for data transmission corresponding to the second device, the first resource includes channel resources in M third durations, and N and M are positive integers.

After the method provided in the first aspect is implemented, the first device may indicate the second device not to perform data transmission on the reserved channel resource. This prevents the second device from occupying channel resources for long time, to release channel resources for a cellular communication system. The first device may schedule a terminal device other than the second device by using the released channel resources. This improves data transmission efficiency.

With reference to the method provided in the first aspect, the method further includes: The first device sends data to the second device on a second resource. When the second resource and the first resource overlap, the first device discards data mapped to the first resource; or the first device delays transmission of the data mapped to the first resource to a third resource, where the third resource and the first resource do not overlap.

In this way, the first device may further not transmit data to the second device on the reserved resource, to release the channel resource for the cellular communication system.

With reference to the method provided in the first aspect, the method further includes: The first device sends downlink data to the second device.

The reference time domain location is a time domain start location corresponding to the downlink data.

With reference to the method provided in the first aspect, the downlink data includes a first sequence and first data, the first sequence is located before the first data, and the reference time domain location is determined based on a start time domain location of the first sequence or an end time domain location of the first sequence, or is determined based on a start location of the first data.

With reference to the method provided in the first aspect, the method further includes: The first device receives first capability information sent by the second device. The first capability information includes any one or more of the following: whether the second device supports a reserved resource; and a maximum duration for which the second device supports the reserved resource.

In this way, the first device may determine an appropriate reserved resource based on a capability of the second device, so that the second device can support the reserved resource.

With reference to the method provided in the first aspect, after the first device sends the first resource to the second device, the method further includes: The first device sends, to the second device, one or more of the following: a second sequence, a third sequence, or a fourth sequence. The second sequence is used by the second device to obtain energy or obtain a carrier. The third sequence is used by the second device to determine a start location of downlink data transmission. The fourth sequence is used by the second device to perform time and/or frequency tracking synchronization.

With reference to the method provided in the first aspect, when the first resource meets a preset condition, after the first device sends the first resource to the second device, the method further includes: The first device sends, to the second device, one or more of the following: a second sequence, a third sequence, or a fourth sequence. The second sequence is used by the second device to obtain energy or obtain a carrier. The third sequence is used by the second device to determine a start location of downlink data transmission. The fourth sequence is used by the second device to perform time and/or frequency tracking synchronization.

In this way, the first device may provide energy, a delimiter used to transmit data, and information used for time or frequency synchronization for the second device, especially when a duration of a resource reserved by the second device is excessively long. This can improve data transmission efficiency of the second device.

With reference to the method provided in the first aspect, after that the first device sends the first indication information to the second device, the method further includes: The first device sends configuration information of a timer to the second device. After the timer expires, the first resource may be used by the second device to transmit data.

In this way, the first device may indicate a duration of a resource reserved for the second device, to more properly indicate the duration of a resource reserved for the second device.

With reference to the method provided in the first aspect, after that the first device sends the first indication information to the second device, the method further includes: The first device sends second indication information to the second device. The second indication information is used by the second device to determine a fourth resource, where the fourth resource is not used for data transmission corresponding to the second device.

In this way, the first device may update, based on a service requirement, a resource reserved for the second device.

According to a second aspect, an embodiment of this application provides a communication method, where the method includes: A first device sends downlink data to a second device or receives uplink data from the second device on a fifth resource. The first device sends downlink data to a third device or receives uplink data from the third device on a sixth resource. In frequency domain, the fifth resource is located in the sixth resource, a bandwidth corresponding to the fifth resource is less than a bandwidth corresponding to the sixth resource, and a maximum bandwidth supported by the second device is less than a maximum bandwidth supported by the second device. In frequency domain, an offset value between a high frequency boundary of the fifth resource and that of the sixth resource is less than a threshold. Alternatively, in frequency domain, an offset value between a low frequency boundary of the fifth resource and that of the sixth resource is less than a threshold.

After the method provided in the second aspect is implemented, a location of a channel resource occupied for uplink and downlink data transmission of the second device may be configured to be near a low frequency boundary of a carrier, or near a high frequency boundary of a carrier, or located in a guard band of a carrier specified in a 4G LTE or 5G NR communication system, to resolve impact of passive IoT transmission, WUR data transmission, or other data transmission on a channel resource for cellular data transmission when the first device does not configure a reserved resource or the second device does not support the reserved resource.

According to a third aspect, an embodiment of this application provides a communication method, where the method includes: A second device receives first indication information sent by a first device. The second device determines a first resource based on the first indication information, where the first resource is not used by the second device to perform data transmission. The first indication information in the first indication information includes a first duration, and a channel resource in the first duration after the first indication information is the first resource. Alternatively, the first indication information includes a second duration and a third duration, a start location of the third duration is a time domain location whose distance from a reference time domain location is N second durations, there is an interval of one third duration between every two second durations, channel resources in the N second durations are used for data transmission corresponding to the second device, the first resource includes channel resources in M third durations, and N and M are positive integers.

After the method provided in the third aspect is implemented, the second device may not perform data transmission on the reserved channel resource based on an indication of the first device. This prevents the second device from occupying channel resources for long time, to release channel resources for a cellular communication system. The first device may schedule a terminal device other than the second device by using the released channel resources. This improves data transmission efficiency.

With reference to the method provided in the third aspect, the method further includes: The second device receives, on a second resource, data sent by the first device. When the second resource and the first resource overlap, the second device discards data mapped to the first resource; or the second device delays transmission of the data mapped to the first resource to a third resource, where the third resource and the first resource do not overlap.

In this way, the second device may further not transmit data to the second device on the reserved resource, to release the channel resource for the cellular communication system.

With reference to the method provided in the third aspect, the method further includes: The second device receives downlink data sent by the first device.

The reference time domain location is a time domain start location corresponding to the downlink data.

With reference to the method provided in the third aspect, the downlink data includes a first sequence and first data, the first sequence is located before the first data, and the reference time domain location is determined based on a start time domain location of the first sequence or an end time domain location of the first sequence, or is determined based on a start location of the first data.

With reference to the method provided in the third aspect, the method further includes: The second device sends first capability information to the first device. The first capability information includes any one or more of the following: whether the second device supports a reserved resource; and a maximum duration for which the second device supports the reserved resource.

In this way, the first device can determine an appropriate reserved resource based on a capability of the second device, that is, the second device can support the reserved resource. This further improves implementability of this solution.

With reference to the method provided in the third aspect, after that a second device receives first indication information sent by a first device, the method further includes: The second device receives one or more of the following sent by the first device: a second sequence, a third sequence, or a fourth sequence. The second sequence is used by the second device to obtain energy or obtain a carrier. The third sequence is used by the second device to determine a start location of downlink data transmission. The fourth sequence is used by the second device to perform time and/or frequency tracking synchronization.

With reference to the method provided in the third aspect, when the first resource meets a preset condition, after that a second device receives first indication information sent by a first device, the method further includes: The second device receives one or more of the following sent by the first device: a second sequence, a third sequence, or a fourth sequence. The second sequence is used by the second device to obtain energy or obtain a carrier. The third sequence is used by the second device to determine a start location of downlink data transmission. The fourth sequence is used by the second device to perform time and/or frequency tracking synchronization.

In this way, the second device may receive the energy, a delimiter used to transmit data, and information used for time or frequency synchronization that are provided by the first device, especially when a duration of a resource reserved by the second device is excessively long. This can improve data transmission efficiency of the second device.

With reference to the method provided in the third aspect, after that a second device receives first indication information sent by a first device, the method further includes: The second device receives configuration information that is of a timer and that is sent by the first device. After the timer expires, the second device transmits data on the first resource.

In this way, the second device may further determine a duration of a reserved resource, to reserve a resource of a proper duration.

With reference to the method provided in the third aspect, after that a second device receives first indication information sent by a first device, the method further includes: The second device receives second indication information sent by the first device. The second indication information is used by the second device to determine a fourth resource, where the fourth resource is not used by the second device to perform data transmission.

In this way, the first device may update, based on a service requirement, a resource reserved for the second device.

According to a fourth aspect, an embodiment of this application provides a communication method. A second device receives, on a fifth resource, downlink data sent by a first device, or sends uplink data to the first device. The third device receives, on a sixth resource, downlink data sent by the first device, or sends uplink data to the first device. In frequency domain, the fifth resource is located in the sixth resource, a bandwidth corresponding to the fifth resource is less than a bandwidth corresponding to the sixth resource, and a maximum bandwidth supported by the second device is less than a maximum bandwidth supported by the second device. In frequency domain, an offset value between a high frequency boundary of the fifth resource and that of the sixth resource is less than a threshold. Alternatively, in frequency domain, an offset value between a low frequency boundary of the fifth resource and that of the sixth resource is less than a threshold.

After the method provided in the fourth aspect is implemented, a location of a channel resource occupied for uplink and downlink data transmission of the second device may be configured to be near a low frequency boundary of a carrier, or near a high frequency boundary of a carrier, or located in a guard band of a carrier specified in a 4G LTE or 5G NR communication system, to resolve impact of passive IoT transmission, WUR data transmission, or other data transmission on a channel resource for cellular data transmission when the first device does not configure a reserved resource or the second device does not support the reserved resource.

According to a fifth aspect, an embodiment of this application provides a first device, including a communication unit and a processing unit. The processing unit is configured to determine first indication information, where the first indication information is used by a second device to determine a first resource, and the first resource is not used by the second device to perform data transmission. The communication unit is configured to send the first indication information to the second device. The first indication information includes a first duration, and a channel resource in the first duration after the first indication information is the first resource.

Alternatively, the first indication information includes a second duration and a third duration, a start location of the third duration is a time domain location whose distance from a reference time domain location is N second durations, there is an interval of one third duration between every two second durations, channel resources in the N second durations are used for data transmission corresponding to the second device, the first resource includes channel resources in M third durations, and N and M are positive integers.

After the first device provided in the fifth aspect is used, the first device may indicate the second device not to perform data transmission on the reserved channel resource. This prevents another device from occupying channel resources for long time, to release channel resources for a cellular communication system. The first device may schedule a terminal device other than the second device by using the released channel resources. This improves data transmission efficiency.

With reference to the first device provided in the fifth aspect, the communication unit is further configured to: send data to the second device on a second resource. When the second resource and the first resource overlap, the communication unit discards data mapped to the first resource; or the communication unit delays transmission of the data mapped to the first resource to a third resource, where the third resource and the first resource do not overlap.

In this way, the first device may further not transmit data to the second device on the reserved resource, to release the channel resource for the cellular communication system.

With reference to the first device provided in the fifth aspect, the communication unit is further configured to send downlink data to the second device. The reference time domain location is a time domain start location corresponding to the downlink data.

With reference to the first device provided in the fifth aspect, the downlink data includes a first sequence and first data, the first sequence is located before the first data, and the reference time domain location is determined based on a start time domain location of the first sequence or an end time domain location of the first sequence, or is determined based on a start location of the first data.

With reference to the first device provided in the fifth aspect, the communication unit is further configured to receive first capability information sent by the second device. The first capability information includes any one or more of the following: whether the second device supports a reserved resource; and a maximum duration for which the second device supports the reserved resource.

In this way, the second device may determine an appropriate reserved resource based on a capability of the first device, so that the second device can support the reserved resource.

With reference to the first device provided in the fifth aspect, after the communication unit sends the first resource to the second device, the communication unit is further configured to send, to the second device, one or more of the following: a second sequence, a third sequence, or a fourth sequence. The second sequence is used by the second device to obtain energy or obtain a carrier. The third sequence is used by the second device to determine a start location of downlink data transmission. The fourth sequence is used by the second device to perform time and/or frequency tracking synchronization.

With reference to the first device provided in the fifth aspect, when the first resource meets a preset condition, after the communication unit sends the first resource to the second device, the first device is further configured to send, to the second device, one or more of the following: a second sequence, a third sequence, or a fourth sequence. The second sequence is used by the second device to obtain energy or obtain a carrier. The third sequence is used by the second device to determine a start location of downlink data transmission. The fourth sequence is used by the second device to perform time and/or frequency tracking synchronization.

In this way, the first device may provide energy, a delimiter used to transmit data, and information used for time or frequency synchronization for the second device, especially when indicating a duration of a resource reserved by the second device is excessively long. This can improve data transmission efficiency of the second device.

With reference to the first device provided in the fifth aspect, after the communication unit sends the first indication information to the second device, the method includes: The first device sends configuration information of a timer to the second device. After the timer expires, the first resource may be used by the second device to transmit data.

In this way, the first device may indicate a duration of a resource reserved for the second device, to more properly indicate the duration of the resource reserved for the second device.

With reference to the first device provided in the fifth aspect, after that the first device sends the first indication information to the second device, the method further includes: The communication unit is further configured to send second indication information to the second device. The second indication information is used by the second device to determine a fourth resource, where the fourth resource is not used for data transmission corresponding to the second device.

In this way, the first device may update, based on a service requirement, a resource reserved for the second device.

According to a sixth aspect, an embodiment of this application provides a first device, including a communication unit. The communication unit of the first device is configured to: send downlink data to a second device or receive uplink data from the second device on a fifth resource.

The communication unit of the second device is configured to: send downlink data to a third device or receives uplink data from the third device on a sixth resource. In frequency domain, the fifth resource is located in the sixth resource, a bandwidth corresponding to the fifth resource is less than a bandwidth corresponding to the sixth resource, and a maximum bandwidth supported by the first device is less than a maximum bandwidth supported by the second device. In frequency domain, an offset value between a high frequency boundary of the fifth resource and that of the sixth resource is less than a threshold. Alternatively, in frequency domain, an offset value between a low frequency boundary of the fifth resource and that of the sixth resource is less than a threshold.

After the first device provided in the sixth aspect is used, a location of a channel resource occupied for uplink and downlink data transmission of the second device may be configured to be near a low frequency boundary of a carrier, or near a high frequency boundary of a carrier, or located in a guard band of a carrier specified in a 4G LTE or 5G NR communication system, to resolve impact of passive IoT transmission, WUR data transmission, or other data transmission on a channel resource for cellular data transmission when the first device does not configure a reserved resource or the second device does not support the reserved resource.

According to a seventh aspect, an embodiment of this application provides a second device, including a communication unit and a processing unit.

The communication unit is configured to receive first indication information sent by a first device. The processing unit is configured to determine a first resource based on the first indication information, where the first resource is not used by the second device to perform data transmission. The first indication information includes a first duration, and a channel resource in the first duration after the first indication information is the first resource. Alternatively, the first indication information includes a second duration and a third duration, a start location of the third duration is a time domain location whose distance from a reference time domain location is N second durations, there is an interval of one third duration between every two second durations, channel resources in the N second durations are used for data transmission corresponding to the second device, the first resource includes channel resources in M third durations, and N and M are positive integers.

After the second device provided in the seventh aspect is used, the second device may not perform data transmission on the reserved channel resource based on an indication of the first device. This prevents the second device from occupying channel resources for long time, to release channel resources for a cellular communication system. The first device may schedule a terminal device other than the second device by using the released channel resources. This improves data transmission efficiency.

With reference to the second device provided in the seventh aspect, the communication unit is further configured to: receive, on a second resource, data sent by the first device. When the second resource and the first resource overlap, the communication unit discards data mapped to the first resource; or the communication unit delays transmission of the data mapped to the first resource to a third resource, where the third resource and the first resource do not overlap.

In this way, the second device may further not transmit data to the second device on the reserved resource, to release the channel resource for the cellular communication system.

With reference to the second device provided in the seventh aspect, the method further includes: The communication unit is further configured to receive downlink data sent by the first device. The reference time domain location is a time domain start location corresponding to the downlink data.

With reference to the second device provided in the seventh aspect, the downlink data includes a first sequence and first data, the first sequence is located before the first data, and the reference time domain location is determined based on a start time domain location of the first sequence or an end time domain location of the first sequence, or is determined based on a start location of the first data.

With reference to the second device provided in the seventh aspect, the communication unit is further configured to send first capability information to the first device. The first capability information includes any one or more of the following: whether the second device supports a reserved resource; and a maximum duration for which the second device supports the reserved resource.

In this way, the first device can determine an appropriate reserved resource based on a capability of the second device, that is, the second device can support the reserved resource. This further improves implementability of this solution.

With reference to the second device provided in the seventh aspect, after the communication unit receives the first indication information sent by the first device, the communication unit is further configured to receive one or more of the following sent by the first device: a second sequence, a third sequence, or a fourth sequence. The second sequence is used by the second device to obtain energy or obtain a carrier. The third sequence is used by the second device to determine a start location of downlink data transmission. The fourth sequence is used by the second device to perform time and/or frequency tracking synchronization.

With reference to the second device provided in the seventh aspect, when the first resource meets a preset condition, after the communication unit receives the first indication information sent by the first device, the communication unit is further configured to receive one or more of the following sent by the first device: a second sequence, a third sequence, or a fourth sequence. The second sequence is used by the second device to obtain energy or obtain a carrier. The third sequence is used by the second device to determine a start location of downlink data transmission. The fourth sequence is used by the second device to perform time and/or frequency tracking synchronization.

In this way, the second device may receive the energy, a delimiter used to transmit data, and information used for time or frequency synchronization that are provided by the first device, especially when a duration of a resource reserved by the second device is excessively long. This can improve data transmission efficiency of the second device.

With reference to the second device provided in the seventh aspect, after the communication unit receives the first indication information sent by the first device, the communication unit is further configured to receive configuration information that is of a timer and that is sent by the first device. After the timer expires, the second device transmits data on the first resource.

In this way, the second device may further determine a duration of a reserved resource, to reserve a resource of a proper duration.

With reference to the second device provided in the seventh aspect, after the communication unit receives the first indication information sent by the first device, the communication unit is further configured to receive second indication information sent by the first device. The second indication information is used by the second device to determine a fourth resource, where the fourth resource is not used by the second device to perform data transmission.

In this way, the first device may update, based on a service requirement, a resource reserved for the second device.

According to an eighth aspect, an embodiment of this application provides a second device, including a communication unit.

A communication unit of one second device is configured to: receive, on a fifth resource, downlink data sent by a first device, or send uplink data to the first device.

A communication unit of another second device is configured to: receive, on a sixth resource, downlink data sent by the first device, or send uplink data to the first device.

In frequency domain, the fifth resource is located in the sixth resource, a bandwidth corresponding to the fifth resource is less than a bandwidth corresponding to the sixth resource, and a maximum bandwidth supported by the second device is less than a maximum bandwidth supported by the another second device. In frequency domain, an offset value between a high frequency boundary of the fifth resource and that of the sixth resource is less than a threshold. Alternatively, in frequency domain, an offset value between a low frequency boundary of the fifth resource and that of the sixth resource is less than a threshold.

After the second device provided in the eighth aspect is used, a location of a channel resource occupied for uplink and downlink data transmission of the second device may be configured to be near a low frequency boundary of a carrier, or near a high frequency boundary of a carrier, or located in a guard band of a carrier specified in a 4G LTE or 5G NR communication system, to resolve impact of passive IoT transmission, WUR data transmission, or other data transmission on a channel resource for cellular data transmission when the first device does not configure a reserved resource or the second device does not support the reserved resource.

According to a ninth aspect, an embodiment of this application provides a communication method, where the method includes: A first device determines first indication information, where the first indication information is used by a second device to determine a first resource, and the first resource is not used by the second device to perform data transmission; and the first device sends the first indication information to the second device. The first indication information includes a second duration and a third duration, a start location of the third duration is a time domain location whose distance from a reference time domain location is N second durations, there is an interval of one third duration between every two second durations, and channel resources in the N second durations are used for data transmission corresponding to the second device. In addition, the first indication information further includes first information, and the first information indicates whether channel resources in M third durations are used for the data transmission corresponding to the second device. When the first information indicates that the channel resources in the M third durations are not used for the data transmission corresponding to the second device, the first resource includes the channel resources in the M third durations. N and M are positive integers.

After the method provided in the ninth aspect is implemented, the first device may indicate the second device not to perform data transmission on the reserved channel resource. This prevents the second device from occupying channel resources for long time, to release channel resources for a cellular communication system. The first device may schedule a terminal device other than the second device by using the released channel resources. This improves data transmission efficiency.

With reference to the method provided in the ninth aspect, the method further includes: The first device sends data to the second device on a second resource. When the second resource and the first resource overlap, the first device discards data mapped to the first resource; or the first device delays transmission of the data mapped to the first resource to a third resource, where the third resource and the first resource do not overlap.

In this way, the first device may further not transmit data to the second device on the reserved resource, to release the channel resource for the cellular communication system.

With reference to the method provided in the ninth aspect, the method further includes: The first device sends downlink data to the second device.

The reference time domain location is a time domain start location corresponding to the downlink data.

With reference to the method provided in the ninth aspect, the downlink data includes a first sequence and first data, the first sequence is located before the first data, and the reference time domain location is determined based on a start time domain location of the first sequence or an end time domain location of the first sequence, or is determined based on a start location of the first data.

With reference to the method provided in the ninth aspect, the method further includes: The first device receives first capability information sent by the second device. The first capability information includes any one or more of the following: whether the second device supports a reserved resource; and a maximum duration for which the second device supports the reserved resource.

In this way, the first device may determine an appropriate reserved resource based on a capability of the second device, so that the second device can support the reserved resource.

With reference to the method provided in the ninth aspect, after the first device sends the first resource to the second device, the method further includes: The first device sends, to the second device, one or more of the following: a second sequence, a third sequence, or a fourth sequence. The second sequence is used by the second device to obtain energy or obtain a carrier. The third sequence is used by the second device to determine a start location of downlink data transmission. The fourth sequence is used by the second device to perform time and/or frequency tracking synchronization.

With reference to the method provided in the ninth aspect, when the first resource meets a preset condition, after the first device sends the first resource to the second device, the method further includes: The first device sends, to the second device, one or more of the following: a second sequence, a third sequence, or a fourth sequence. The second sequence is used by the second device to obtain energy or obtain a carrier. The third sequence is used by the second device to determine a start location of downlink data transmission. The fourth sequence is used by the second device to perform time and/or frequency tracking synchronization.

In this way, the first device may provide energy, a delimiter used to transmit data, and information used for time or frequency synchronization for the second device, especially when a duration of a resource reserved by the second device is excessively long. This can improve data transmission efficiency of the second device.

With reference to the method provided in the ninth aspect, after that the first device sends the first indication information to the second device, the method further includes: The first device sends configuration information of a timer to the second device. After the timer expires, the first resource may be used by the second device to transmit data.

In this way, the first device may indicate a duration of a resource reserved for the second device, to more properly indicate the duration of the resource reserved for the second device.

With reference to the method provided in the ninth aspect, after that the first device sends the first indication information to the second device, the method further includes: The first device sends second indication information to the second device. The second indication information is used by the second device to determine a fourth resource, where the fourth resource is not used for data transmission corresponding to the second device.

In this way, the first device may update, based on a service requirement, a resource reserved for the second device.

According to a tenth aspect, an embodiment of this application provides a computer-readable storage medium, including instructions. When the instructions are run on a first device, the first device is enabled to perform the method described in the first aspect, the second aspect, or the ninth aspect.

According to an eleventh aspect, an embodiment of this application provides a computer-readable storage medium, including instructions, where when the instructions are run on a second device, the second device is enabled to perform the method described in the third aspect or the fourth aspect.

According to a twelfth aspect, an embodiment of this application provides a chip, where the chip is applied to a first device, the chip includes one or more processors, and the processor is configured to invoke computer instructions to enable the first device to perform the method described in the first aspect, the second aspect, or the ninth aspect.

According to a thirteenth aspect, an embodiment of this application provides a chip, where the chip is applied to a second device, the chip includes one or more processors, and the processor is configured to invoke computer instructions to enable the second device to perform the method described in the third aspect or the fourth aspect.

### BRIEF DESCRIPTION OF DRAWINGS

FIG. 1 is a schematic diagram of a communication system according to an embodiment of this application;
FIG. 2A is a schematic diagram of a downlink communication method according to an embodiment of this application;
FIG. 2B is a schematic diagram of an uplink communication method according to an embodiment of this application;
FIG. 2C is a schematic flowchart of a communication method according to an embodiment of this application;
FIG. 3A is a schematic diagram of a communication method according to an embodiment of this application;
FIG. 3B is a schematic diagram of another communication method according to an embodiment of this application;
FIG. 4A is a schematic flowchart of a communication method according to an embodiment of this application;
FIG. 4B is a schematic flowchart of another communication method according to an embodiment of this application;
FIG. 4C is a schematic flowchart of another communication method according to an embodiment of this application;
FIG. 4D is a schematic flowchart of another communication method according to an embodiment of this application;
FIG. 5A is a schematic flowchart of a communication method according to an embodiment of this application;
FIG. 5B is a schematic diagram of channel resource configuration according to an embodiment of this application;
FIG. 5C is a schematic diagram of another channel resource configuration according to an embodiment of this application;
FIG. 6 is a schematic diagram of another channel resource configuration according to an embodiment of this application;
FIG. 7A is a schematic diagram of a structure of a first device according to an embodiment of this application;
FIG. 7B is a schematic diagram of another structure of a first device according to an embodiment of this application;
FIG. 8A is a schematic diagram of a structure of a second device according to an embodiment of this application; and
FIG. 8B is a schematic diagram of another structure of a second device according to an embodiment of this application.

### DESCRIPTION OF EMBODIMENTS

The technical solutions according to embodiments of this application are clearly and completely described in the following with reference to the accompanying drawings. In descriptions of embodiments of this application, unless otherwise specified, "/" means "or". For example, A/B may represent A or B. In this specification, "and/or" describes only an association relationship for describing associated objects and represents that three relationships may exist. For example, A and/or B may represent the following three cases: Only A exists, both A and B exist, and only B exists.

The terms "first" and "second" below are merely intended for a purpose of description, and shall not be understood as implying or implying relative importance or implicitly indicating a quantity of indicated technical features. Therefore, a feature limited to "first" and "second" may explicitly or implicitly include one or more features. In the descriptions of the embodiments of this application, unless otherwise specified, "a plurality of" means two or more.

An "embodiment" mentioned in this application means that a particular feature, structure, or feature described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with another embodiment.

With popularization of the IoT, more and more IoT devices have been deployed in lives of people, for example, devices that are targeted at sensing and data collection in smart water meters, shared bicycles, smart cities, environment monitoring, smart home, forest fire prevention, and the like. In the future, IoT devices are to be ubiquitous, and may be embedded in every clothes, every package, and every key. Almost all offline objects are to be online with enablement of IoT technologies. However, the IoT devices are widely distributed and a large number of IoT devices are deployed. Therefore, a process of implementing Internet of Everything brings great challenges to the industry, especially a power supply problem. Currently, the IoT is still mainly promoted by an operator. An IoT module needs to use a standard cellular protocol to communicate with a base station. Because the base station needs to cover as large an area as possible, the IoT module needs to be able to perform communication when being far away from the base station. Therefore, the IoT device still needs to consume a current of up to 30 mA during wireless communication. Therefore, a current IoT module still needs to use a battery with a high capacity to work. Consequently, it is difficult to make the IoT module small, and costs of the IoT device are increased.

In addition, some low-power-consumption terminals play an important role in IoT applications such as medical care, smart homes, industrial sensors, and wearable devices. However, due to a limited size of such terminals, it is difficult to prolong running time of these devices by simply increasing a battery capacity. Therefore, to prolong a terminal battery life, power consumption of wireless communication needs to be reduced. A radio transceiver is one of the most power-consuming components.

Therefore, in order to further popularize the IoT and implant an IoT module into a human body or a smaller object, it is no longer possible to match a higher-capacity battery. It is necessary to use a smaller battery, or even completely get rid of battery limitations, or to design a method for reducing power consumption of a radio transceiver to overcome limitations such as costs, a size, and power consumption of the IoT device. Therefore, in June 2021, 3GPP organized a seminar on potential research directions for R18, discussed internet of things enhancement technologies, and disclosed that 5G-Advanced (5G-Advanced) was to introduce a passive IoT and a WUR in a 5G NR system starting from R18. However, after the passive IoT and the WUR are introduced into the 5G NR system, in the 5G NR system, there is a terminal that supports NR data transmission, a terminal that supports passive IoT data transmission, and a terminal that supports WUR data transmission. However, a 5G NR channel resource is occupied when these terminals transmit passive IoT data or WUR data, and passive IoT data and WUR data continuously transmitted in time domain affects continuous allocation of an NR channel resource. How to schedule a channel resource so that passive IoT data transmission and WUR data transmission do not affect 5G NR data transmission is an urgent problem to be resolved.

To resolve a coexistence problem caused after the passive IoT and the WUR are introduced into the 5G NR system, an embodiment of this application provides a communication method. The communication method is applied to a communication system including a first device and a second device. In the communication method, the first device may indicate the second device to reserve a channel resource, and the second device does not perform data transmission on the reserved channel resource. This prevents the second device from occupying channel resources for long time, to release channel resources for a cellular communication system. The first device may schedule a terminal device other than the second device by using the released channel resources.

The cellular communication system includes but is not limited to a communication system such as a 4G communication system, a 4G evolved communication system, a 5G communication system, or a 5G evolved communication system. The first device is a network device and/or a terminal device, and the first device includes but is not limited to a base station or a powerful terminal device. The second device is a terminal device, and the second device includes but is not limited to a passive IoT device, a WUR device, or the like.

To facilitate understanding of the communication method provided in embodiments of this application, the following first describes a system architecture and/or an application scenario of the communication method. It may be understood that the system architecture and/or the application scenario described in embodiments of this application are/is intended to describe the technical solutions in embodiments of this application more clearly, and do/does not constitute a limitation on the technical solutions provided in embodiments of this application.

The communication method provided in this application is mainly applied to a long term evolution (Long term evolution, LTE) system, a long term evolution advanced (LTE advanced, LTE-A) system, or a 5G NR system. In some other embodiments of this application, the communication method may also be applied to another communication system, provided that there is an entity device that is in the communication system and that can send information, and there is another entity that is in the communication system and that can receive information. A type of the communication system is not limited in embodiments of this application.

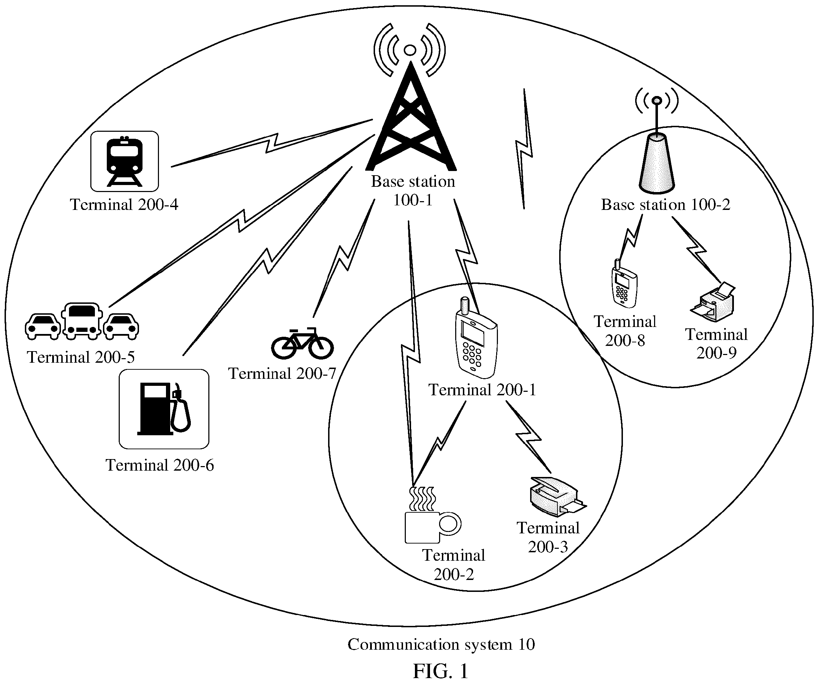

FIG. 1 shows an example of a communication system 10 to which a communication method provided in this application is applied.

As shown in FIG. 1, the communication system 10 includes one or more first devices and one or more second devices.

A base station 100-1, a base station 100-2, and a terminal 200-1 to a terminal 200-9 form the communication system 10. In the communication system 10, the base station 100-1 may directly send information to one or more terminal devices in the terminal 200-1 to the terminal 200-7, or the base station 100-1 may send information to one or more terminal devices in the terminal 200-8 and the terminal 200-9 through the base station 100-2. In addition, the terminal 200-1 to the terminal 200-3 may also form a communication sub-system 10-1. In the communication sub-system 10-1, the terminal 200-1 may send information to one or more terminal devices in the terminal 200-2 and the terminal 200-3. In addition, the base station 100-2, the terminal 200-8, and the terminal 200-9 may also form another communication sub-system 10-2. In the communication sub-system 10-2, the base station 100-2 may send information to one or more terminal devices in the terminal 200-8 and the terminal 200-9.

It may be understood that a quantity and types of terminal devices included in the communication system 10 shown in FIG. 1, and a quantity and types of base stations included in the communication system 10 shown in FIG. 1 are only an example. In some other embodiments of this application, the communication system may alternatively include fewer or more communication sub-systems, terminal devices, base stations, or the like than those shown in FIG. 1. An architecture of the communication system is not limited in embodiments of this application.

In the following embodiments of this application, the base station 100-1 and the base station 100-2 may be collectively referred to as a base station 100, and the terminal 200-1 to the terminal 200-9 may be collectively referred to as a terminal 200.

The communication system 10 shown in FIG. 1 is merely used as an example. In this embodiment of this application, a first device is a base station 100-1 or a base station 100-2; and a second device is a terminal 200-1, a terminal 200-2, ..., or a terminal 200-9.

Specially, compared with the other terminals 200-2 to 200-9, the terminal 200-1 has a better coverage condition than the other terminals 200-2 to 200-9. In other words, a communication distance between the terminal 200-1 and the base station is shorter. In addition, the terminal 200-1 has a more powerful function than the other terminals 200-2 to 200-9. Therefore, according to the communication method provided in this application, a coexistence problem between NR UE and passive IoT UE/WUR. UE can be resolved. In other words, impact of passive IoT/WUR data transmission on NR continuous resource allocation can be avoided. The communication method provided in this application can further resolve a problem of contention for data transmission between two types of passive IoT UEs. Specifically, for example, first UE is passive IoT UE in a good coverage condition and has short transmission time, and second UE is passive IoT UE in a poor coverage condition. Because a large amount of time domain repetition or spectrum spreading needs to be performed to improve a signal-to-noise ratio, normal communication with a network device can be ensured. Transmission time corresponding to the second UE is usually long. If the second UE performs continuous transmission and occupies a channel for long time, the first UE can perform transmission only after the second UE completes transmission. This increases a transmission delay of the first UE. In this case, for the second UE, the communication method provided in this application may be used. A reserved resource is set in a transmission process of the second UE, and the second UE cannot perform transmission on the reserved resource, but the network device may schedule the first UE on the reserved resource. In this way, a transmission opportunity of the first UE is increased, so that a problem that a transmission delay of the first UE is increased when the first UE waits for the second UE to end transmission can be resolved.

The following describes possible product forms of the first device and the second device in embodiments of this application.

The first device is the first device, and a device type that can be implemented for the first device includes any one or more of the following: a base station, a gateway-type node device, a user terminal with a powerful function, or the like. The base station is an entity device that is on a network side and that is configured to send or receive a signal. In different mobile communication systems, the base station may have different names. For example, a base station in LTE mobile communication is referred to as an eNodeB, and a base station in 5G NR is referred to as a gNB. The base station may be a macro base station, a micro base station, a small cell, or a pole site.

In embodiments of this application, the first device may support receiving of data sent by the second device to the first device through backscatter communication; or the first device may further support sending of a wake-up signal to the second device.

The second device is user equipment (user equipment, UE), and may also be referred to as a terminal device. A device type that can be implemented for the second device includes any one or more of the following: a smart wearable device like a mobile phone, a watch, or a band; a smart pet wearable device like a collar; a smart household like a smart air cleaner, a robotic vacuum cleaner, a smart power strip, or a smart kitchen; a smart office device like a smart printer, a smart copier, or a smart lighting system; a monitoring device on an urban road; a medical and health care device; a terminal device configured to sense atmosphere, soil, forests, water resources, and the like; and the like.

In embodiments of this application, the second device includes user equipment that supports massive machine-type communication of passive communication, or may be a terminal device that supports a wake-up receiver. Alternatively, the second device may be user equipment that supports backscatter communication. In other words, the second device includes a terminal that supports passive IoT data transmission, or may further include a terminal that supports WUR data transmission.

The following briefly describes passive IoT, WUR, and cellular communication in the communication method provided in embodiments of this application.

### 1. Passive IoT

Passive IoT is developed through inspiration of a large quantity of mature passive radio frequency identification (Radio Frequency Identification, RFID) technologies. Generally, an RFID system include a reader (reader) and a tag (tag). In the passive RFID, the reader sends an excitation signal to the tag to charge the tag. In other words, the tag receives a microwave signal sent by the reader, uses the microwave signal to excite an electromagnetic induction coil in the tag to obtain energy, to drive a chip in the tag to work, and sends data to the reader by sending a signal through backscattering. In this manner, the reader may identify an identification (identification, ID) of the tag, and perform operations such as reading and writing on the tag. In this way, data is read and written on the tag. Because a power module is omitted, a size of a passive RFID product can reach a centimeter level or be even smaller. In addition, the passive RFID product has a simple structure, low costs, a low failure rate, and a long service life.

A transmission mechanism of the passive IoT provided in this application is similar to that of passive RFID. In the passive IoT, a passive IoT device may be passive (Batter Free). In other words, the passive IoT device is not equipped with or does not mainly rely on a battery or a wired power supply for power supply. However, that the passive IoT device does not have a power module does not mean that the passive IoT device does not need to use power. The passive IoT device may obtain energy from ambient light, heat, and radio frequency, to support sensing, wireless transmission, distributed computing, and the like of data of internet of things. The passive IoT device may alternatively be a passive energy storage device, or may be a semi-passive device. The passive energy storage device has an energy storage device. The semi-passive device has a battery, but a power supply object of the battery is a low-power-consumption electronic circuit, a low-power-consumption chip, or the like that needs to maintain data in the device.

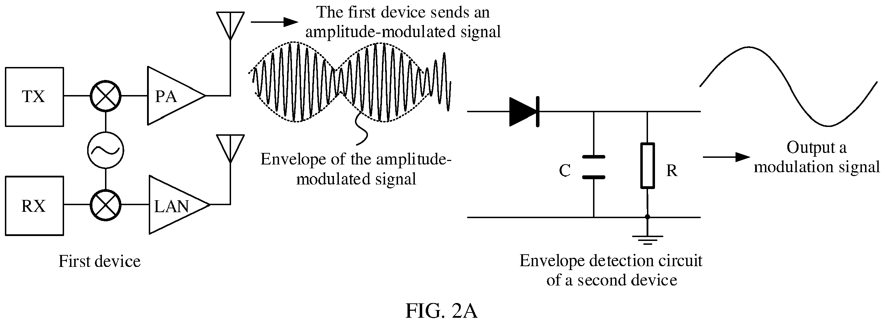

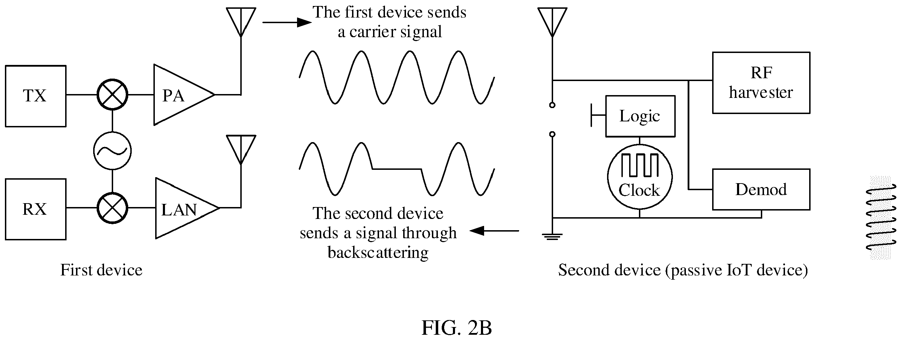

FIG. 2A and FIG. 2B are schematic diagrams of examples of uplink and downlink communication methods in passive IoT communication.

FIG. 2A is the schematic diagram of the example of the passive IoT downlink communication method.

A first device sends an amplitude-modulated signal to a second device over a downlink. The second device receives the amplitude-modulated signal, and may perform envelope detection on the amplitude-modulated signal by using an envelope detector, to obtain a low-frequency signal in the amplitude-modulated signal.

The envelope detection means a process of demodulating a low-frequency signal from an amplitude-modulated signal. In a broad sense, the detection is usually referred to as demodulation, and is an inverse process of modulation, namely, a process of extracting a modulation signal from a modulated signal. For the amplitude-modulated signal, the envelope detection is a process of extracting the modulation signal from an amplitude change of the amplitude-modulated signal. An envelope is an amplitude change curve reflecting a high-frequency signal. When a low-frequency signal is used to perform amplitude modulation on a high-frequency signal, the low-frequency signal becomes an envelope of the high-frequency signal.

Main components of the envelope detector include a diode and an RC oscillation circuit shown in FIG. 2A. A common method of the envelope detection is to use a diode to perform one-way filtering and then perform low-pass filtering. A low-pass filter is the RC oscillation circuit shown in FIG. 2A. A function of the diode is to prevent positive and negative envelopes from canceling each other during low-pass filtering, resulting in that a low-frequency signal cannot be detected.

It may be understood that the envelope detector circuit shown in FIG. 2A is a schematic diagram of a structure of a most conventional basic circuit. An evolved structure of the envelope detector circuit is not described herein. A structure of the envelope detector circuit used by the second device is not limited in embodiments of this application.

FIG. 2B is the schematic diagram of the example of the passive IoT uplink communication method.

The second device is a passive IoT device. Herein, that the passive IoT device is a passive device is used as an example. The second device cannot provide a power supply, and has no condition to connect to a wired power supply for the passive IoT device to perform data transmission. Therefore, the second device needs to obtain energy from an external environment, to provide the energy for the passive IoT device to perform another operation like data transmission or data processing.

Specifically, when receiving a carrier signal sent by the first device, the second device may drive a chip to transmit, by using energy obtained from an electromagnetic field generated in space, information stored in the second device.

In the implementation method, a relationship between the first device and the second device is an "electromagnetic backscatter coupling" relationship. The "electromagnetic backscatter coupling" means that, by using a spatial propagation rule of the electromagnetic wave, after a transmitted electromagnetic wave contacts a measured object, the transmitted electromagnetic wave carrying information about the measured object is reflected back. This coupling is suitable for a long-distance radio frequency identification system working in high frequency and microwave.

It may be understood that the uplink communication method in passive IoT communication shown in FIG. 2B is only an example. In some other embodiments of this application, the second device, namely, the passive IoT device, may further drive, by obtaining energy like ambient light and heat, the chip to transmit information stored in the second device. As described above, the second device may alternatively be a passive energy storage device or a semi-passive device.

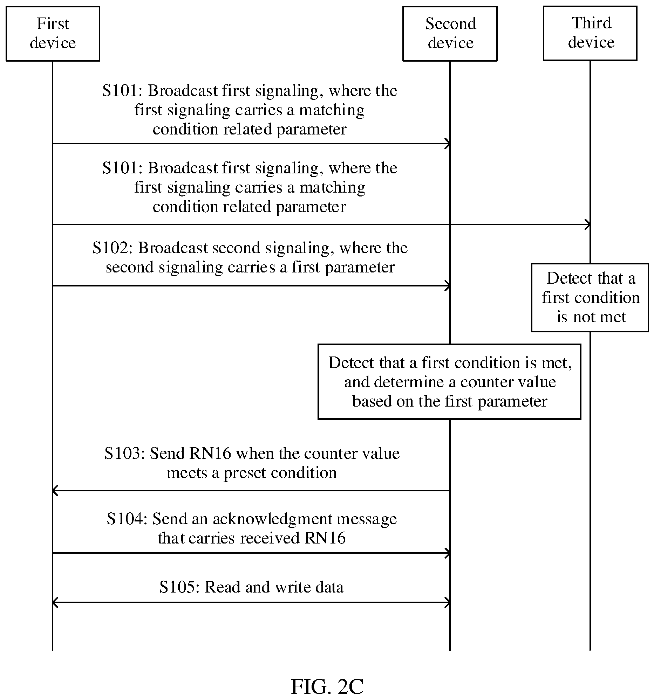

FIG. 2C shows an example of a schematic diagram of a passive IoT communication process. Specifically, the following steps are included.

S101: A first device broadcasts first signaling, where the first signaling carries a matching condition related parameter.

The matching condition related parameter is used to select a specific device that meets the matching condition. Correspondingly, devices, for example, a second device and a third device, whose communication distances with the first device meet the specific condition receive the first signaling.

It may be understood that the first device may broadcast the first signaling for a plurality of times, to filter, for the plurality of times, specific devices that meet the condition.

S102: The first device broadcasts second signaling, where the second signaling carries a first parameter, and the first parameter includes any one or more of the following: a downlink data rate, an uplink data rate, a coding type, a Q value, a target indicator, and the like.

The downlink data rate, the uplink data rate, and the coding scheme are used to initialize a communication link. The Q value is used to determine a counter value of a device. The target indicator is used to further filter devices.

Correspondingly, the devices, for example, the second device and the third device, whose communication distances with the first device meet the specific condition receive the second signaling. After receiving the first signaling and the second signaling, the second device detects that the matching condition in the first signaling is met and the target indicator in the second signaling is met. In this case, the second device determines, in response to the second signaling, the counter value based on the Q value in the second signaling. Specifically, a random number may be generated in a range from 0 to 2^{Q} - 1 as the counter value. After receiving the first signaling and the second signaling, if the third device detects that any one or more of the following conditions are not met: the matching condition in the first signaling, and a target indicator in the second signaling, the third device does not respond.

S103: When a counter value of the second device meets the preset condition, send RN16 to the first device.

The preset condition is, for example, that the counter value is 0. When the counter value of the second device is not 0, the value may be adjusted by receiving third signaling sent by the first device. Each time the second device receives the third signaling, the second device decreases the counter value by one until the counter value is decreased to 0. RN16 is a random number generated by the second device. In this way, a probability that a collision occurs when a plurality of devices respond to the first device can be reduced.

S104: The first device sends an acknowledgment message that carries RN16. Step S103 and step S104 may be understood as a handshake process of both parties.

S105: The first device performs data read and write operations on the second device. The data read operation is specifically that the second device backscatters data to the first device.

### 2. WUR

In a wireless communication system, most energy of a station device is wasted in channel monitoring. To be specific, when a station receives or sends no message, if the station device continuously monitors a channel, a large amount of energy is consumed. To reduce energy waste and prevent the station device from running slowly caused by long-time dormancy, the station device needs to be capable of running in a low-power-consumption and low-delay state. A WUR architecture emerges, and a core idea of the WUR architecture is as follows: In addition to a conventional main transceiver module, namely, a main radio (main radio, mr for short), a low-power-consumption wake-up receiver (wake-up receiver, wurx for short) part is added to a receive end device, and the conventional transceiver module is an 802.11 main radio (main radio, mr for short). Because power consumption of the wurx is several orders of magnitude lower than traditional low power consumption, the wurx can keep running.

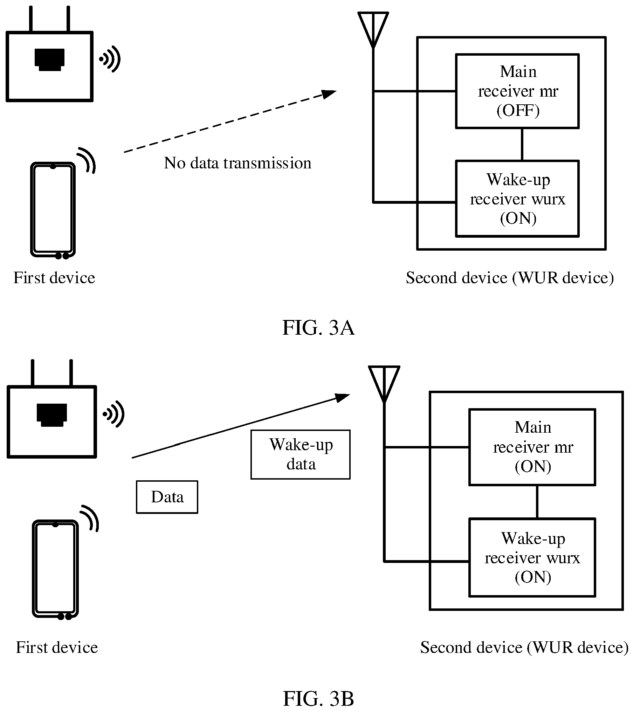

As shown in FIG. 3A, when no data is transmitted between a first device and a second device, mr in the second device enters deep dormancy, wurx with low power consumption starts to work, and the wurx is configured to monitor a channel. In this case, the mr remains in a deep sleep or off mode until the wurx wakes the mr up.

As shown in FIG. 3B, when data is transmitted between a first device and a second device, the first device first sends a wake-up data packet (wake up packet, wup for short) to a wurx. After an always-on wurx correctly receiving the wup sent to the wurx, the always-on wurx interrupts a microcontroller of an mr to switch the mr from a sleep mode to an active mode, to wake up the mr of the second device. Subsequently, the microcontroller of the mr turns on a main radio transceiver to communicate with the first device in a conventional manner.

After completing communication with the first device, the mr enters dormancy again, and the wurx starts to monitor whether there is a wup sent to the wurx, to wake up the mr again. In this technology, a low-power-consumption wurx is configured to replace a main transceiver module to monitor a channel. This effectively reduces energy waste during monitoring a device.

### 3. Random access process in a cellular communication system

Random access is a basic and important process in a cellular communication system like a 4G LTE system or a 5G NR system, and main purposes of the random access are: ① to establish a radio link between a terminal and a network device; and ② to establish a unique terminal identifier C-RNTI, and request a network to allocate an uplink resource to the terminal. Therefore, the random access is not only used for initial access, but also used for new cell access in a handover process, access after a radio link failure, resume of uplink synchronization and a UL-SCH resource request when there is uplink/downlink data transmission, and the like.

There are two types of random access: contention-based random access and contention-free random access. A difference is that manners of selecting a random access prefix in a random access process are different. In contention-based random access, a terminal side randomly selects a random prefix from contention-based random access prefixes based on a specific algorithm. In contention-free random access, a network side assigns a contention-free random access prefix to a terminal device through downlink dedicated signaling.

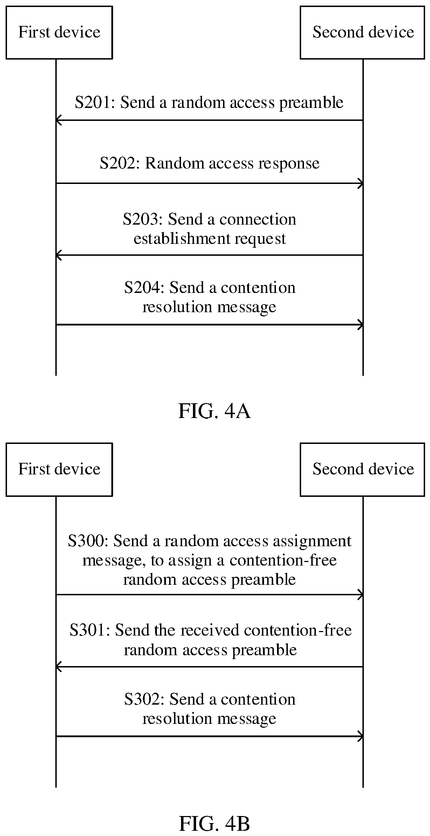

FIG. 4A shows an example of a schematic diagram of a contention-based four-step random access process. Specifically, the following steps are included.

S201: A second device sends a random access preamble to a first device.

Specifically, the preamble is a preamble sequence randomly selected by the second device, namely, a terminal device, and is sent to a network device, namely, the first device, on an RACH channel. S202: The first device sends a random access response to the second device.

Specifically, after detecting that there is the preamble, the network device sends the random access response in a downlink. The random access response needs to include at least one or more of the following: a number of the received preamble sequence, timing adjustment information, location indication information of an uplink resource allocated to the second device, and a temporarily allocated terminal identifier (C-RNTI).

S203: The second device sends a connection establishment request to the first device.

The second device receives the random access response, and determines, based on the number of the received preamble sequence, whether the random access response is sent to the second device. If the random access response is sent to the second device, the second device sends an uplink message on an allocated uplink resource, that is, sends the connection establishment request, and carries an identifier (UE-ID) of the second device or carries a random number generated according to a preset rule.

S204: The first device sends a contention resolution message to the second device.

Specifically, if an identifier or a random number included in the contention resolution message is the same as the UE-ID or the random number that is reported by the second device to the first device in step S203, contention resolution succeeds, and the random access process is completed.

FIG. 4B shows an example of a schematic diagram of a contention-free four-step random access process. Specifically, the following steps are included.

S300: A first device sends a random access assignment message to a second device, to assign a contention-free random access preamble.

Specifically, in a handover scenario, the first device may notify the second device through RRC signaling; and in a downlink data arrival scenario and an auxiliary positioning scenario, the first device may notify the second device through a PDCCH.

S301: The second device sends the received contention-free random access preamble to the first device.

Specifically, the second device initiates random access on a specified PRACH based on an indication of the first device by using a specified preamble.

S302: The first device sends a contention resolution message to the second device.

A random access response is received. The connection is successfully established.

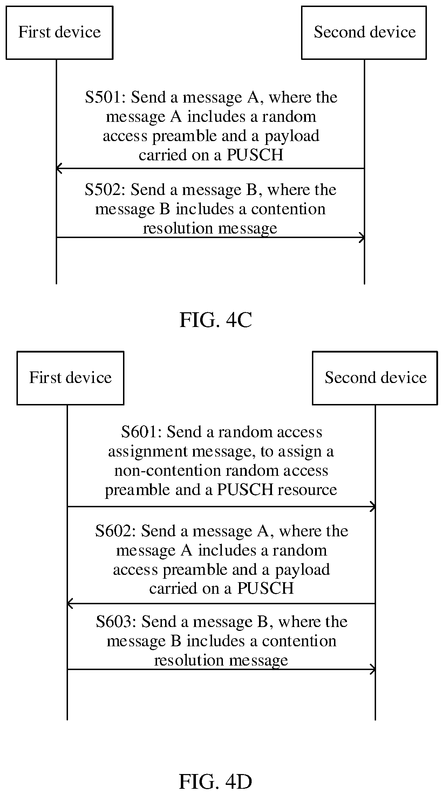

FIG. 4C shows an example of a schematic diagram of a contention-based two-step random access process. Specifically, the following steps are included.

S501: A second device sends a message A to a first device, where the message A includes a random access preamble and a payload (payload) carried on a PUSCH.

Specifically, the preamble is a preamble sequence randomly selected by the second device, namely, a terminal device, and is sent to a network device, namely, the first device, on an RACH channel.

S502: The first device sends a message B to the second device, where the message B includes a contention resolution message.

FIG. 4D shows an example of a schematic diagram of a contention-based two-step random access process. Specifically, the following steps are included.

S601: A first device sends a random access assignment message to a second device, to assign a contention-free random access preamble and a PUSCH resource.

S602: The second device sends a message A to the first device, where the message A includes a random access preamble and a payload (payload) carried on a PUSCH.

Specifically, the preamble is a preamble sequence randomly selected by the second device, namely, a terminal device, and is sent to a network device, namely, the first device, on an RACH channel.

S603: The first device sends a message B to the second device, where the message B includes a contention resolution message.

A4GLTE system is used as an example, each cell has 64 available preamble sequences. For a contention-based random access process, the second device randomly selects a preamble sequence to initiate a random access process to the first device side. Therefore, if a plurality of second devices initiate a random access process at a same moment by using a same preamble sequence, a conflict occurs, and an access failure may be caused. For the contention-free random access, a preamble sequence allocated by an eNodeB is used to initiate a random access process, and therefore an access success rate is high. However, it is considered that the eNodeB can learn in advance, only in a handover scenario or in a scenario in which downlink data is sent, that the second device needs to initiate the random access process, and therefore the contention-free random access may be used only in the two scenarios, and the contention-based random access is used only in another application scenario.

For specific descriptions of the four-step random access process and the two-step random access process in an NR system, refer to section 9.2.6 in TS 3GPP 38.300 V16.7.0. Details are not described in embodiments of this application.

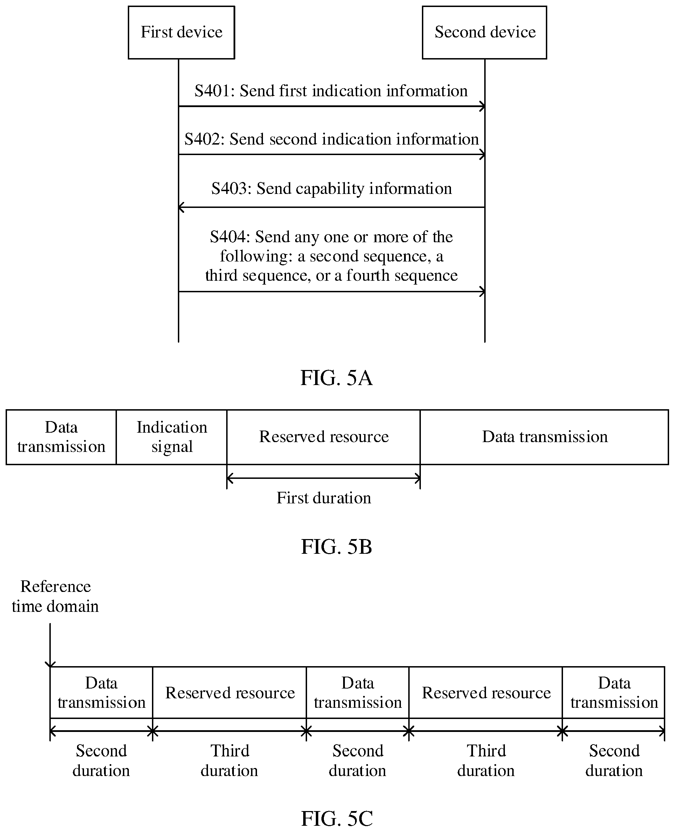

The following describes a communication method provided in an embodiment of this application with reference to a method flowchart shown in FIG. 5A.

FIG. 5A shows an example of a flowchart of a communication method according to this application.

Step S401: A first device determines first indication information, and sends the first indication information to a second device.

Correspondingly, the second device receives the first message. The second device does not transmit data on a first resource. The first indication information is used by the second device to determine the first resource, and the first resource is not used by the second device to perform data transmission.

In an implementation, the first indication information includes a first duration, and a channel resource in the first duration after the first indication information is the first resource. For details, refer to FIG. 5B. FIG. 5B shows an example of mapping of a first resource on a channel resource. Data transmission mapped on the channel resource means that the second device occupies a channel resource in this duration to perform data transmission, for example, transmit passive IoT data, WUR data, and the like. Indication information mapped on the channel resource means that the second device occupies a channel resource in this duration to receive first indication information delivered by the first device. A mapped reserved resource on the channel resource means that the second device does not occupy a channel resource in this duration to perform data transmission. In time domain, the first indication information may be located at a start location of data transmission of the second device, or may be located at an end location of the data transmission of the second device, or may be located at any time location between the start location of the data transmission of the second device and the end location of the data transmission of the second device.

In an implementation, the first indication information includes a second duration and a third duration, a start location of the third duration is a time domain location whose distance from a reference time domain location is N second durations, there is an interval of one third duration between every two second durations, channel resources in the N second durations are used for data transmission corresponding to the second device, the first resource includes channel resources in M third durations, and N and M are positive integers. In addition, the reference time domain location may be a time domain start location corresponding to downlink data when the first device sends the downlink data to the second device. Specifically, the downlink data includes a first sequence and first data. The second device may obtain time and/or frequency synchronization based on the first sequence, or may determine a boundary of a time unit. The time unit may be a symbol, a timeslot, a subframe, or a frame. The first sequence is located before the first data. The first sequence and the first data may be consecutive or inconsecutive in time domain. A start location of communication may be determined based on a start location of the first sequence, or the reference time domain location may be determined based on an end location of the first sequence, or the reference time domain location may be determined based on the start location of the first data. For example, the reference time domain location is the start location of the first sequence, the end location of the first sequence, or a start location of the first data. The first sequence may also be referred to as a preamble sequence. For details, refer to FIG. 5C. FIG. 5C shows an example of mapping of a first resource on a channel resource. Mapped data transmission on the channel resource means that a second device occupies a channel resource in this duration to perform data transmission, for example, transmit passive IoT data, WUR data, and the like. A mapped reserved resource on the channel resource means that the second device does not occupy a channel resource in this duration to perform data transmission. Data transmission and the reserved resource occur. In some embodiments, a duration of each segment of data transmission and a duration of a reserved resource may be fixed, or may be increased or decreased proportionally, which are specifically determined by the first indication information delivered by the first device. This is not limited in embodiments of this application.

It should be noted that, after the first device determines the first indication information, when the first device sends data to the second device on the second resource, and when the second resource and the first resource overlap, the first device discards data mapped to the first resource, or the first device delays transmission of the data mapped to the first resource to a third resource, where the third resource and the first resource do not overlap.

The following describes some optional embodiments in embodiments of this application. In other words, the method process shown in FIG. 5A may further include the following steps:

S402: The first device sends second indication information to the second device, to update a reserved resource.

Specifically, the first device may further continue to send the second indication information to the second device after sending the first indication information to the second device, where the second indication information is used by the second device to determine a fourth resource, and the fourth resource is not used for data transmission corresponding to the second device. It should be noted that, after the second device receives updated reserved resource indication information, that is, receives the fourth resource described above, it is considered that previously received reserved resource indication information is ineffective, that is, the previously determined first resource is ineffective. In other words, the second device can transmit data on the first resource but cannot transmit data on the fourth resource. In the embodiment, when the first resource and the fourth resource do not overlap, a network device sends downlink data to the first device on the first resource.

S403: The first device may receive capability information of the second device that is sent by the second device.

Specifically, the first capability information includes any one or more of the following: whether the second device supports the reserved resource; and a maximum duration for which the second device supports the reserved resource. Correspondingly, after receiving the capability information, the first device may determine the first indication information based on the capability information.

It may be understood that an execution sequence of step S403 may be before or after that of step S401. To be specific, before or after the first device determines the first indication information, the first device may receive the capability information sent by the second device. This is not limited in this application. However, in some embodiments, that the execution sequence of step S403 is before that of step S401 is used as an example embodiment, so that the first device can determine, based on a capability of the second device, appropriate first indication information of the reserved resource.

S404: The first device sends, to the second device, one or more of the following: a second sequence, a third sequence, or a fourth sequence.

Specifically, after the first device sends an indication signal of the reserved resource, the first device may further send the one or more sequences to the second device. Herein, the indication signal of the reserved resource includes a first indication signal, a second indication signal, and more indication signals used to reserve a resource or update the reserved resource. The second sequence is used by the second device to obtain energy or obtain a carrier. The third sequence is used by the second device to determine a start location of downlink data transmission. The fourth sequence is used by the second device to perform time and/or frequency tracking synchronization. The second sequence may be referred to as a capability signal or a carrier, the second signal may be referred to as a delimiter, and the third signal may be referred to as a midamble sequence.

It may be understood that in some embodiments, only when the reserved resource meets a first condition (a first reserved resource indicated by the first indication information is used as an example herein), the first device sends, to the second device, one or more of the following: the second sequence, the third sequence, or the fourth sequence. That the first resource meets the first condition specifically means that when the second duration, the third duration, or the M third durations is greater than or equal to a preset duration, the first device may further send, to the second device, one or more of the following: the second sequence, the third sequence, or the fourth sequence, where the second duration, the third duration, or the M third durations respectively corresponding to a same preset duration or different preset durations.

In an optional embodiment, in step S401, when the first device sends the first indication information to the second device, the first device may further send configuration information of a timer to the second device. When the timer expires, the first resource may be used by the second device to transmit data. In other words, the first device may send the configuration information of the timer to the second device. The configuration information of the timer indicates a life cycle of the first resource. When the timer exceeds timing time, the first resource does not take effect, and the second device may transmit data on the first resource.

In an optional embodiment, the first indication information in step S401 may further include first information, and the first information indicates whether channel resources in the M third durations are used for data transmission corresponding to the second device. When the first information indicates that the channel resources in the M third durations are not used for data transmission corresponding to the second device, the first resource includes the channel resources in the M third durations. When the first information indicates that the channel resources in the M third durations are used for data transmission corresponding to the second device, the second device may transmit the data on the channel resources in the M third durations.

In an optional embodiment, information used to indicate the reserved resource in this application, for example, the first indication information, the second indication information, or the first information, may be obtained by performing negation or repeated spreading on a preamble sequence, a midamble sequence, or a postamble sequence. For example, if a bit sequence corresponding to the preamble sequence is [0,0,1,1,0,0,0,1,1,1,1,1,1,0,1,0,1,0,1,1,0,1,1,0], a bit sequence of the indication information is [1,1,0,0,1,1,1,0,0,0,0,0,0,1,0,1,0,1,0,0,1,0,0,1].

In an optional embodiment, if the indication information is incorrectly detected or omitted to be detected, understanding on the first device side is inconsistent with that on the second device side. For example, the first device side sends indication information, where the indication information carries related information of the reserved resource, but the second device does not correctly receive the indication information. In this case, the first device and the second device do not reach an agreement on whether to reserve a resource. To avoid the problem, at least one of the following may be considered in design of the indication information:

The indication information carries information used for error correction, and an extremely low encoding bit rate is used. For example, the indication information carries 1-bit information, to indicate whether there is a reserved resource subsequently, or indicate whether there is a reserved resource in a data transmission process. This may improve reliability of the indication information, and reduce a possibility that understanding inconsistency occurs between two communication parties.

Cyclic redundancy check (cyclic redundancy check, CRC) is added to the indication information when the indication information is generated. When receiving the indication information, the second device determines, by using the CRC, whether the indication information is correctly received. This improves reliability of the indication information at a receive end, and reduces the possibility that understanding inconsistency occurs between the two communication parties.

After receiving the indication information, the second device sends feedback information to the first device. The first device may determine, by using the feedback information, whether the second device correctly receives the indication information. If the second device incorrectly receives the indication information, the first device may retransmit the indication information. This may reduce the possibility that understanding inconsistency occurs between the two communication parties.

The following describes a specific implementation method of the communication method shown in FIG. 5A.

Step S401 specifically has three implementations that are separately described below.

In a first implementation, the first device may use the communication method shown in FIG. 2C, where downlink data carries the first indication information. Specifically, step S101 shown in FIG. 2C may carry the first indication information in step S401.

Particularly, because step S101 may be repeatedly performed for a plurality of times, that is, the first device may repeatedly send the first signaling to the second device for the plurality of times, each time the first signaling is sent, indication information of a reserved resource, namely, the first indication information in step S401, may be carried; or when the first signaling is not sent for the first time, indication information for updating a reserved resource, namely, the second indication information in step S402, may be further carried.

In a second implementation, the first device may add the first indication information to downlink data in the contention-based four-step random access process shown in FIG. 4A or the contention-based two-step random access process shown in FIG. 4C. In other words, step S202 shown in FIG. 4A or S502 shown in FIG. 4C may carry the first indication information in step S401. Alternatively, the first device may add the first indication information to an RRC release message (not shown in FIG. 4A).

In a third implementation, the first device may add the first indication information to downlink data in the contention-free four-step random access process shown in FIG. 4B or the contention-free two-step random access process shown in FIG. 4D. In other words, step S300 and step S302 shown in FIG. 4B or S601 and S603 shown in FIG. 4D may carry the first indication information in step S401. Alternatively, the first device may add the first indication information to an RRC release message (not shown in FIG. 4A).

Step S402 specifically has three implementations that are separately described below.

In a first implementation, the first device may add the second indication information to downlink data in the communication method shown in FIG. 2C. Specifically, step S102 shown in FIG. 2C may carry the second indication information in step S402, and when the first signaling is not sent for the first time in step S101, indication information for updating a reserved resource, namely, the second indication information in step S402, may also be carried. Optionally, downlink data in step S104 and step S105 may carry indication information for updating a reserved resource. After receiving the latest indication information, the responding second device performs a corresponding operation based on a reserved resource indicated by the latest indication information.

In a second implementation, the first device may add the second indication information to downlink data in the contention-based four-step random access process shown in FIG. 4A or the contention-based two-step random access process shown in FIG. 4C. In other words, step S204 shown in FIG. 4A or S502 shown in FIG. 4C may carry the second indication information in step S402.

In a third implementation, the first device may add the second indication information to downlink data in the contention-free four-step random access process shown in FIG. 4B or the contention-free two-step random access process shown in FIG. 4D. In other words, step S302 shown in FIG. 4B or S601 and S603 shown in FIG. 4D may carry the second indication information in step S402.

Step S403 specifically has three implementations that are separately described below.

In a first implementation, the first device may add capability information to uplink data in the communication method shown in FIG. 2C. Specifically, step S103 shown in FIG. 2C may carry the capability information in step S403.

In a second implementation, the first device may add the capability information to uplink data in the contention-based four-step random access process shown in FIG. 4A or the contention-based two-step random access process shown in FIG. 4C. In other words, step S201 and step S203 shown in FIG. 4A or step S501 shown in FIG. 4C may carry the capability information in step S403.

In a third implementation, the first device may add the capability information to uplink data in the contention-free four-step random access process shown in FIG. 4B or the contention-free two-step random access process shown in FIG. 4D. In other words, step S301 shown in FIG. 4B or S602 shown in FIG. 4D may carry the capability information in step S403.

Step S404 specifically has three implementations that are separately described below.

In a first implementation, the first device may add information to downlink data in the communication method shown in FIG. 2C. Specifically, step S101, step S102, or step S104 shown in FIG. 2C may carry the information in step S404.

In a second implementation, the first device may add the information to downlink data in the contention-based four-step random access process shown in FIG. 4A or the contention-based two-step random access process shown in FIG. 4C. In other words, step S202 and step S204 shown in FIG. 4A or step S502 shown in FIG. 4C may carry the information in step S404.

In a third implementation, the first device may add the information to downlink data in the contention-free four-step random access process shown in FIG. 4B or the contention-free two-step random access process shown in FIG. 4D. In other words, step S300 and step S302 shown in FIG. 4B or S601 and S603 shown in FIG. 4D may carry the information in step S404.

In addition, the communication method shown in FIG. 5A further includes some optional steps. Communication information in these optional steps may also be correspondingly carried in the uplink data or downlink data shown in FIG. 2C, FIG. 4A, and FIG. 4B for transmission.

One of the optional steps is used as an example, in step S401, when the first device sends the first indication information to the second device, the first device may further send the configuration information of the timer to the second device. The configuration information of the timer in the optional step may be specifically carried in downlink data transmission like step S101, step S102, or step S104 shown in FIG. 2C, or may be carried in downlink data transmission like step S202 or step S204 shown in FIG. 4A, or may be carried in downlink data transmission like step S300 or step S302 shown in FIG. 4B.

Another optional step is used as an example, after receiving the indication information, the second device sends the feedback information to the first device. The feedback in this optional step may be specifically carried in uplink data transmission like step S103 shown in FIG. 2C, or may be carried in uplink data transmission like step S201 or step S203 shown in FIG. 4A, or may be carried in uplink data transmission like step S301 shown in FIG. 4B.

In this embodiment, it is considered how to mitigate impact of passive IoT transmission, WUR data transmission, or other data transmission on a channel resource for cellular data transmission when no reserved resource is configured by the first device or the second device does not support a reserved resource. The following describes another communication method provided in this application. In the method, data transmission of a second device includes passive IoT data transmission and WUR data transmission, for example, a wake-up data packet. A location of a channel resource occupied for uplink and downlink data transmission of a second device is near a low frequency boundary of a carrier specified in a 4G LTE or 5G NR communication system or near a high frequency boundary of a carrier, or located in a guard band of a carrier.

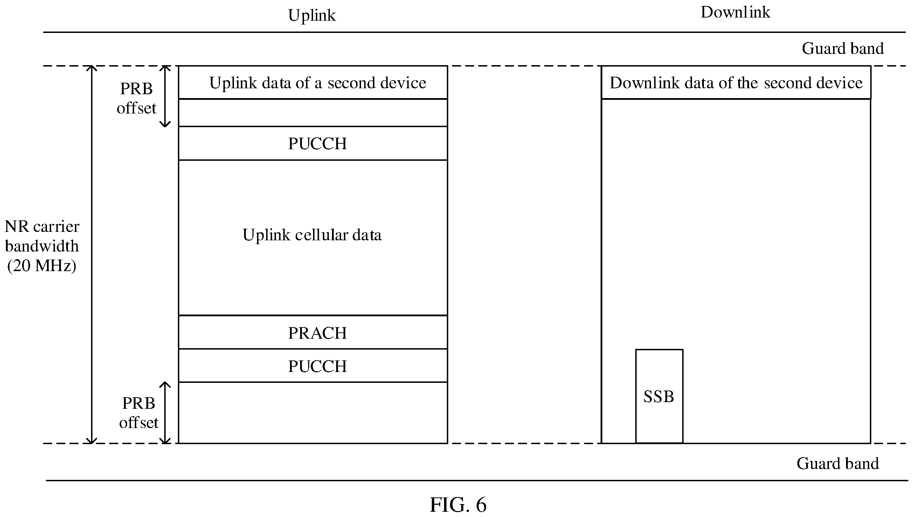

The following describes in detail the another communication method provided in this application with reference to s channel resource configuration diagram shown in FIG. 6.

As shown in FIG. 6, a frequency resource of a subcarrier in 5G NR is used as an example, and a resource occupied for data transmission of the second device is set near a high frequency boundary of the subcarrier.

Optionally, to ensure that there are sufficient resources on an NR carrier boundary for the second device to perform data transmission that includes transmission of passive IoT data, transmission of a WUR wake-up data packet, or the like, a PRB offset (physical resource block offset) may be further configured. The second device may transmit passive IoT data or a WUR wake-up data packet within the PRB offset.

Specifically, when configuring an air interface resource in a cellular communication system, a first device configures a frequency domain resource of a PUCCH/PRACH at a frequency domain location that is at a specific PRB offset away from a carrier boundary. Specifically, when configuring a common PUCCH of NR, the first device configures a resource of the PUCCH by using an information element pucch-ResourceCommon. A value range of a common resource number of pucch-ResourceCommon is 0 to 15. When pucch-ResourceCommon is configured to any one of {2, 5, 6, 9, 10, 13, 14}, it can be ensured that there is a specific PRB offset between a start location of the PUCCH and the NR carrier boundary. The second device may transmit the passive IoT data or the WUR wake-up data packet within the PRB offset. In addition, when the first device configures a frequency domain resource of a PRACH, in the conventional technology of NR, a start location of the PRACH frequency domain resource is configured by using an information element msg1-FreqencyStart, and msg1-FreqencyStart is configured to be a value greater than 0. This can ensure that there is a specific PRB offset between the start location of the PRACH and the NR carrier boundary. The passive IoT data or the WUR wake-up data packet may be transmitted within the PRB offset.

Optionally, a channel resource occupied by the second device for downlink data transmission includes a resource location occupied for passive IoT downlink transmission or WUR wake-up packet transmission, and may be located at a distance greater than a threshold from an NR SSB. The NR SSB is used by the second device, namely, a terminal, to obtain time and frequency synchronization, obtain a system message, perform RRM measurement, and the like. For a method for configuring an NR SSB, refer to a conventional configuration method in a 4G LTE communication system or a 5G NR communication system. Details are not described herein again.

It may be understood that FIG. 6 shows only an example of the method for configuring the channel resource for data transmission of the second device at the high frequency boundary of the subcarrier. In addition, a channel resource for data transmission of the second device may be alternatively configured within a guard band range or at a low-frequency boundary of the subcarrier. In addition, for a passive IoT device and a WUR device, when the passive IoT device and the WUR device are introduced into the cellular communication system at the same time, a channel resource used by the passive IoT devices to transmit data and a channel resource used by the WUR device to transmit data can be configured as different resources. For example, a resource occupied for passive IoT data transmission is configured at a low frequency boundary of an NR carrier, and a resource occupied for WUR data transmission is configured near a high frequency boundary of the NR carrier, or is located in a guard band of the NR carrier.

It can be learned that, after the communication method provided in the present invention is implemented, a coexistence problem caused after the passive IoT/WUR is introduced into a cellular communication system is resolved. For the passive IoT/WUR, a resource is reserved, so that the reserved resource cannot be used for passive IoT/WUR wake-up data packet transmission, but can be used for cellular data transmission. Alternatively, passive IoT/WUR data transmission is configured to be performed at a subcarrier boundary or within a guard band range. In this manner, impact on continuous resource allocation in 4G and 5G cellular communication systems can be avoided, and data transmission efficiency can be improved.

The mainly describes solutions provided in embodiments of this application from a perspective of interaction between the first device and the second device. It may be understood that, to implement the foregoing functions, the first device and the second device include corresponding hardware structures and/or software modules for performing the functions. With reference to the units and algorithm steps described in embodiments disclosed in the present invention, embodiments of this application can be implemented in a form of hardware or hardware and computer software. Whether a function is performed by hardware or hardware driven by computer software depends on particular applications and design constraints of the technical solution. A person skilled in the art may use different methods to implement the described functions for each particular application, but it should not be considered that the implementation falls beyond the scope of the technical solutions in embodiments of this application.

In embodiments of this application, function unit division may be performed on the first device based on the foregoing method examples. For example, each function unit may be obtained through division based on a corresponding function, or two or more functions may be integrated into one processing unit. The integrated unit may be implemented in a form of hardware, or may be implemented in a form of a software function unit. It should be noted that, in this embodiment of this application, division into the units is an example, and is merely a logical function division. In actual implementation, another division manner may be used.

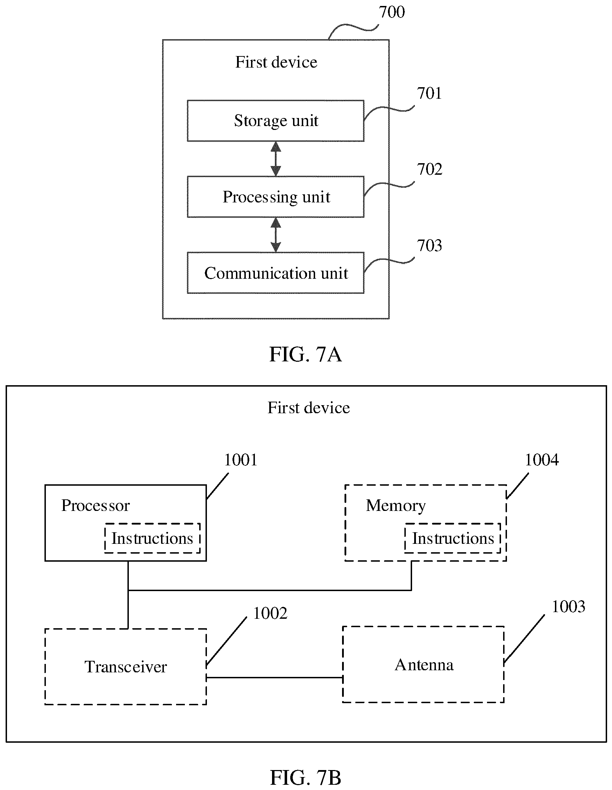

When an integrated unit is used, FIG. 7A is a possible schematic diagram of the structure of a first device in the foregoing embodiments. The first device includes a storage unit 701, a processing unit 702, and a communication unit 703. The storage unit 701 is configured to store program code and data of the first device. The processing unit 702 is configured to control and manage an action of the first device. For example, the processing unit 702 is configured to support the first device in performing S101 and S105 shown in FIG. 2C, S300 in FIG. 4B, S502 in FIG. 4C, S601 and S603 in FIG. 4D, and S401 in FIG. 5A, and/or is configured to perform another step of the technology described in this specification. The communication unit 703 is configured to support communication between the first device and the second device. For example, the communication unit 703 is configured to support the first device in performing steps S101 to S105 in FIG. 2C, S201 to S204 in FIG. 4A, S300 to S302 in FIG. 4B, S502 in FIG. 4C, S601 and S603 in FIG. 4D, and S401 to S404 in FIG. 5A, and/or is configured to perform another step of the technology described in this specification.

The processing unit 702 may be a processor or a controller, such as a central processing unit (English: Central Processing Unit, CPU), a general-purpose processor, a digital signal processor (English: Digital Signal Processor, DSP), an application-specific integrated circuit (English: Application-Specific Integrated Circuit, ASIC), a field programmable gate array (English: Field Programmable Gate Array, FPGA), or another programmable logic device, a transistor logic device, a hardware component, or a combination thereof. The controller/processor may implement or execute various example logical blocks, modules, and circuits described with reference to content disclosed in the present invention. The processor may alternatively be a combination of processors implementing a computing function, for example, a combination of one or more microprocessors, or a combination of the DSP and a microprocessor. The communication unit 703 may be a communication interface, a transceiver, a transceiver circuit, or the like. The communication interface is a general name and may include one or more interfaces, for example, an interface between the first device and the second device. The storage unit 701 may be a memory.

The foregoing describes a schematic diagram of the structure of the first device according to this embodiment of this application. The following describes a possible product form of the first device. It should be understood that any form of product that has a function shown in FIG. 7A falls within the protection scope of the embodiments of this application. It should be further understood that the following descriptions are merely examples, and the product forms of the first device in embodiments of this application are not limited.

In a possible product form, the first device in embodiments of this application may be implemented by using general bus architectures. When the processing unit 702 is the processor, the communication unit 703 is the communication interface, and the storage unit 701 is the memory, the first device in embodiments of this application may be a first device shown in FIG. 7B.

Refer to FIG. 7B. The first device includes a processor 1001 and a transceiver 1002 that is internally connected to and communicates with the processor. The processor 1001 is a general purpose processor, a dedicated processor, or the like. For example, the processor 1501 may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a software program, and process data of the software program. The transceiver 1002 may be referred to as a transceiver unit, a transceiver, a transceiver circuit, or the like, and is configured to implement a transceiver function. The transceiver 1002 may include a receiver and a transmitter. The receiver may be referred to as a receiver, a receiver circuit, or the like, and is configured to implement a receiving function. The transmitter may be referred to as a transmitter, a transmitter circuit, or the like, and is configured to implement a sending function. Optionally, the first device may further include an antenna 1003 and/or a radio frequency unit (not shown in the figure). The antenna 1003 and/or the radio frequency unit may be located inside the first device, or may be separated from the first device, that is, the antenna 1003 and/or the radio frequency unit may be deployed remotely or in a distributed manner.

Optionally, the first device may include one or more memories 1004, and the one or more memories 1004 may store instructions. The instructions may be a computer program. The computer program may be run on the first device, so that the first device performs methods described in the foregoing method embodiments. Optionally, the memory 1004 may further store data. The first device and the memory 1004 may be separately disposed, or may be integrated together.

The processor 1001, the transceiver 1002, and the memory 1004 may be connected to each other by using a communication bus.

In a design, the processor 1001 may be configured to perform steps S 101 and S105 shown in FIG. 2C, step S300 in FIG. 4B, S401 in FIG. 5A, S502 in FIG. 4C, S601 and S603 in FIG. 4D, and/or other steps of the technology described in this specification.

In the foregoing design, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In the foregoing design, the processor 1001 may store instructions, and the instructions may be a computer program. The computer program is run on the processor 1001, so that the first device can perform the method described in the foregoing method embodiments. The computer program may be fixed in the processor 1001, and in this case, the processor 1001 may be implemented by hardware.

In an implementation, the first device may include a circuit, and the circuit may implement the sending, receiving, or communication function in the foregoing method embodiments. The processor and the transceiver that are described in this application may be implemented on an integrated circuit (integrated circuit, IC), an analog IC, a radio frequency integrated circuit RFIC, a hybrid signal IC, an application specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the first device described in this application is not limited thereto, and a structure of the first device may not be limited by FIG. 7B. The first device may be an independent device, or a part of a large device. For example, the first device may be:
(1) an independent integrated circuit IC, a chip, or a chip system or subsystem;
(2) a set including one or more ICs, where optionally, the set of ICs may also include a storage component configured to store data and a computer program;
(3) an ASIC, for example, a modem (Modem);
(4) a module that can be embedded in another device;
(5) a base station, a receiver, or the like.

It should be understood that first devices in the product forms have any function of the first device in the method embodiments.

An embodiment of this application further provides a computer-readable storage medium. The computer-readable storage medium stores computer program code. When a processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides an electronic device. The electronic device may exist in a product form of a chip. A structure of the apparatus includes a processor and an interface circuit. The processor is configured to perform communication with another apparatus through the interface circuit, to enable the apparatus to perform the method in any one of the foregoing embodiments.

An embodiment of this application further provides a wireless communication system. The system includes an AP MLD and a non-AP MLD. The AP MLD and the non-AP MLD may perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

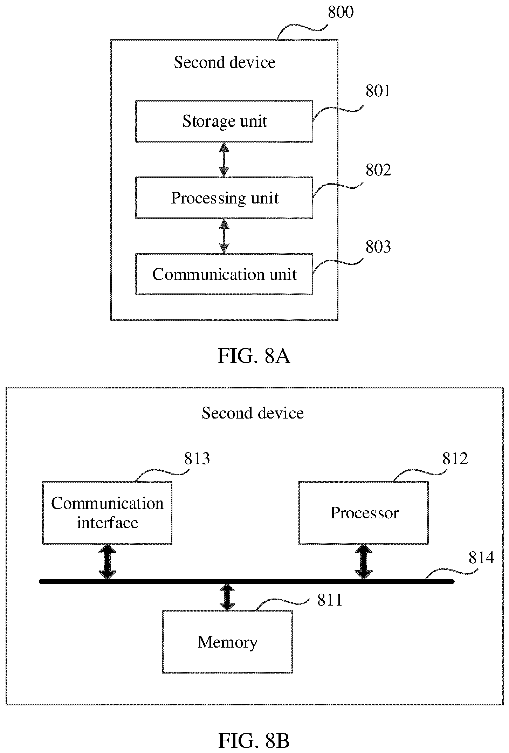

When an integrated unit is used, FIG. 8A is a possible schematic diagram of the structure of the second device in the foregoing embodiments. The second device includes a storage unit 801, a processing unit 802, and a communication unit 803. The storage unit 801 is configured to store program code and data of the second device. The processing unit 802 is configured to control and manage an action of the second device. For example, the processing unit 802 is configured to support the second device in performing S104 in FIG. 2C, S201 and S203 in FIG. 4A, S301 in FIG. 4B, S501 in FIG. 4C, and S602 in FIG. 4D, and/or is configured to perform another step of the technology described in this specification. The communication unit 803 is configured to support communication between the second device and the first device. For example, the communication unit 803 is configured to support S104 in FIG. 2C, S201 and S203 in FIG. 4A, S301 in FIG. 4B, S501 in FIG. 4C, and S602 in FIG. 4D.

The processing unit 802 may be a processor or a controller, such as a central processing unit (English: Central Processing Unit, CPU), a general-purpose processor, a digital signal processor (English: Digital Signal Processor, DSP), an application-specific integrated circuit (English: Application-Specific Integrated Circuit, ASIC), a field programmable gate array (English: Field Programmable Gate Array, FPGA), or another programmable logic device, a transistor logic device, a hardware component, or a combination thereof. The controller/processor may implement or execute various example logical blocks, modules, and circuits described with reference to content disclosed in the present invention. The processor may alternatively be a combination of processors implementing a computing function, for example, a combination of one or more microprocessors, or a combination of the DSP and a microprocessor. The communication unit 803 may be a communication interface, a transceiver, a transceiver circuit, or the like. The communication interface is a general name and may include one or more interfaces, for example, an interface between the second device and the first device. The storage unit 801 may be a memory.

When the processing unit 802 is the processor, the communication unit 803 is the communication interface, and the storage unit 801 is the memory, the second device in embodiments of this application may be a second device shown in FIG. 8B.

In this embodiment of this application, the second device may be a mobile phone, a tablet computer, a desktop computer, a laptop computer, a handheld computer, a notebook computer, an ultra-mobile personal computer (ultra-mobile personal computer, UMPC), a netbook, a cellular phone, or a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. This is not limited in embodiments of this application.

As shown in FIG. 8B, the second device includes: a processor 812, a communication interface 813, and a memory 811. Optionally, the second device may further include a bus 814. The communication interface 813, the processor 812, and the memory 811 may be connected to each other by using the bus 814. The bus 814 may be a peripheral component interconnect (English: Peripheral Component Interconnect, PCI for short) bus, an extended industry standard architecture (English: Extended Industry Standard Architecture, EISA for short) bus, or the like. The bus 814 may be classified into an address bus, a data bus, a control bus, and the like. For ease of representation, only one thick line is used to represent the bus in FIG. 8B, and this does not mean that there is only one bus or only one type of bus.

The implementations of this application may be randomly combined to achieve different technical effects.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the process or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk)), or the like.

A person of ordinary skill in the art may understand that all or some of the processes of the methods in embodiments may be implemented by a computer program instructing related hardware. The program may be stored in the computer-readable storage medium. When the program is executed, the processes in the method embodiments may be included. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, wherein the method comprises:
determining, by a first device, first indication information, wherein the first indication information is used by a second device to determine a first resource, and the first resource is not used by the second device to perform data transmission; and
sending, by the first device, the first indication information to the second device, wherein
the first indication information comprises a first duration, and a channel resource in the first duration after the first indication information is the first resource; or
the first indication information comprises a second duration and a third duration, a start location of the third duration is a time domain location whose distance from a reference time domain location is N second durations, there is an interval of one third duration between every two second durations, channel resources in the N second durations are used for data transmission corresponding to the second device, the first resource comprises channel resources in M third durations, and N and M are positive integers.

2. The method according to claim 1, wherein the method further comprises:
sending, by the first device, downlink data to the second device, wherein
the reference time domain location is a time domain start location corresponding to the downlink data.

3. The method according to claim 2, wherein
the downlink data comprises a first sequence and first data, the first sequence is located before the first data, and the reference time domain location is determined based on a start time domain location of the first sequence or an end time domain location of the first sequence, or is determined based on a start location of the first data.

4. The method according to any one of claims 1 to 3, wherein the method further comprises:
receiving, by the first device, first capability information sent by the second device, wherein
the first capability information comprises any one or more of the following:
whether the second device supports a reserved resource; and
a maximum duration for which the second device supports the reserved resource.

5. The method according to any one of claims 1 to 4, wherein after the first device sends the first resource to the second device, the method further comprises:
sending, by the first device to the second device, one or more of the following: a second sequence, a third sequence, or a fourth sequence, wherein
the second sequence is used by the second device to obtain energy or obtain a carrier;
the third sequence is used by the second device to determine a start location of downlink data transmission; and
the fourth sequence is used by the second device to perform time and/or frequency tracking synchronization.

6. The method according to any one of claims 1 to 4, wherein when the first resource meets a preset condition, after the first device sends the first resource to the second device, the method further comprises:
sending, by the first device to the second device, one or more of the following: a second sequence, a third sequence, or a fourth sequence, wherein
the second sequence is used by the second device to obtain energy or obtain a carrier;
the third sequence is used by the second device to determine a start location of downlink data transmission; and
the fourth sequence is used by the second device to perform time and/or frequency tracking synchronization.

7. A communication method, wherein the method comprises:
receiving, by a second device, first indication information sent by a first device; and
determining, by the second device, a first resource based on the first indication information, wherein the first resource is not used by the second device to perform data transmission, wherein
the first indication information comprises a first duration, and a channel resource in the first duration after the first indication information is the first resource; or
the first indication information comprises a second duration and a third duration, a start location of the third duration is a time domain location whose distance from a reference time domain location is N second durations, there is an interval of one third duration between every two second durations, channel resources in the N second durations are used for data transmission corresponding to the second device, the first resource comprises channel resources in M third durations, and N and M are positive integers.

8. The method according to claim 7, wherein the method further comprises:
receiving, by the second device, downlink data sent by the first device, wherein
the reference time domain location is a time domain start location corresponding to the downlink data.

9. The method according to claim 8, wherein
the downlink data comprises a first sequence and first data, the first sequence is located before the first data, and the reference time domain location is determined based on a start time domain location of the first sequence or an end time domain location of the first sequence, or is determined based on a start location of the first data.

10. The method according to any one of claims 7 to 9, wherein the method further comprises:
sending, by the second device, first capability information to the first device, wherein
the first capability information comprises any one or more of the following:
whether the second device supports a reserved resource; and
a maximum duration for which the second device supports the reserved resource.

11. The method according to any one of claims 7 to 10, wherein after the receiving, by a second device, first indication information sent by a first device, the method further comprises:
receiving, by the second device, one or more of the following sent by the first device: a second sequence, a third sequence, or a fourth sequence, wherein
the second sequence is used by the second device to obtain energy or obtain a carrier;
the third sequence is used by the second device to determine a start location of downlink data transmission; and
the fourth sequence is used by the second device to perform time and/or frequency tracking synchronization.

12. The method according to any one of claims 7 to 11, wherein when the first resource meets a preset condition, after the receiving, by a second device, first indication information sent by a first device, the method further comprises:
receiving, by the second device, one or more of the following sent by the first device: a second sequence, a third sequence, or a fourth sequence, wherein
the second sequence is used by the second device to obtain energy or obtain a carrier;
the third sequence is used by the second device to determine a start location of downlink data transmission; and
the fourth sequence is used by the second device to perform time and/or frequency tracking synchronization.

13. A first device, comprising a communication unit and a processing unit, wherein
the processing unit is configured to determine first indication information, wherein the first indication information is used by a second device to determine a first resource, and the first resource is not used by the second device to perform data transmission; and
the communication unit is configured to send the first indication information to the second device, wherein
the first indication information comprises a first duration, and a channel resource in the first duration after the first indication information is the first resource; or
the first indication information comprises a second duration and a third duration, a start location of the third duration is a time domain location whose distance from a reference time domain location is N second durations, there is an interval of one third duration between every two second durations, channel resources in the N second durations are used for data transmission corresponding to the second device, the first resource comprises channel resources in M third durations, and N and M are positive integers.

14. The first device according to claim 13, wherein
the communication unit is further configured to send downlink data to the second device, wherein
the reference time domain location is a time domain start location corresponding to the downlink data.

15. The first device according to claim 14, wherein
the downlink data comprises a first sequence and first data, the first sequence is located before the first data, and the reference time domain location is determined based on a start time domain location of the first sequence or an end time domain location of the first sequence, or is determined based on a start location of the first data.

16. The first device according to any one of claims 13 to 15, wherein
the communication unit is further configured to receive first capability information sent by the second device, wherein
the first capability information comprises any one or more of the following:
whether the second device supports a reserved resource; and
a maximum duration for which the second device supports the reserved resource.

17. The first device according to any one of claims 13 to 16, wherein after the communication unit sends the first resource to the second device,
the communication unit is further configured to send, to the second device, one or more of the following: a second sequence, a third sequence, or a fourth sequence, wherein
the second sequence is used by the second device to obtain energy or obtain a carrier;
the third sequence is used by the second device to determine a start location of downlink data transmission; and
the fourth sequence is used by the second device to perform time and/or frequency tracking synchronization.

18. The first device according to any one of claims 13 to 16, wherein when the first resource meets a preset condition, after the communication unit sends the first resource to the second device,
the first device is further configured to send, to the second device, one or more of the following: a second sequence, a third sequence, or a fourth sequence, wherein
the second sequence is used by the second device to obtain energy or obtain a carrier;
the third sequence is used by the second device to determine a start location of downlink data transmission; and
the fourth sequence is used by the second device to perform time and/or frequency tracking synchronization.

19. A second device, comprising a communication unit and a processing unit, wherein
the communication unit is configured to receive first indication information sent by a first device; and
the processing unit is configured to determine a first resource based on the first indication information, wherein the first resource is not used by the second device to perform data transmission, wherein
the first indication information comprises a first duration, and a channel resource in the first duration after the first indication information is the first resource; or
the first indication information comprises a second duration and a third duration, a start location of the third duration is a time domain location whose distance from a reference time domain location is N second durations, there is an interval of one third duration between every two second durations, channel resources in the N second durations are used for data transmission corresponding to the second device, the first resource comprises channel resources in M third durations, and N and M are positive integers.

20. The second device according to claim 19, wherein
the communication unit is further configured to receive downlink data sent by the first device; and
the reference time domain location is a time domain start location corresponding to the downlink data.

21. The second device according to claim 20, wherein
the downlink data comprises a first sequence and first data, the first sequence is located before the first data, and the reference time domain location is determined based on a start time domain location of the first sequence or an end time domain location of the first sequence, or is determined based on a start location of the first data.

22. The second device according to any one of claims 19 to 21, wherein
the communication unit is further configured to send first capability information to the first device; and
the first capability information comprises any one or more of the following:
whether the second device supports a reserved resource; and
a maximum duration for which the second device supports the reserved resource.

23. The second device according to any one of claims 19 to 22, wherein after the communication unit receives the first indication information sent by the first device,
the communication unit is further configured to receive one or more of the following sent by the first device: a second sequence, a third sequence, or a fourth sequence, wherein
the second sequence is used by the second device to obtain energy or obtain a carrier;
the third sequence is used by the second device to determine a start location of downlink data transmission; and
the fourth sequence is used by the second device to perform time and/or frequency tracking synchronization.

24. The second device according to any one of claims 19 to 23, wherein when the first resource meets a preset condition, after the communication unit receives the first indication information sent by the first device,
the communication unit is further configured to receive one or more of the following sent by the first device: a second sequence, a third sequence, or a fourth sequence, wherein
the second sequence is used by the second device to obtain energy or obtain a carrier;
the third sequence is used by the second device to determine a start location of downlink data transmission; and
the fourth sequence is used by the second device to perform time and/or frequency tracking synchronization.

25. A computer-readable storage medium, comprising instructions, wherein when the instructions are run on a first device, the first device is enabled to perform the method according to any one of claims 1 to 6.

26. A computer-readable storage medium, comprising instructions, wherein when the instructions are run on a second device, the second device is enabled to perform the method according to any one of claims 7 to 12.

27. A chip, wherein the chip is applied to a first device, the chip comprises one or more processors, and the processor is configured to invoke computer instructions to enable the first device to perform the method according to any one of claims 1 to 6.

28. A chip, wherein the chip is applied to a second device, the chip comprises one or more processors, and the processor is configured to invoke computer instructions to enable the second device to perform the method according to any one of claims 7 to 12.
